# FASCICULE DE BREVET EUROPEEN

(11) **EP 2 067 315 B1**
(45) Date de publication et mention de la délivrance du brevet: **01.12.2010**
(21) Numéro de dépôt: 07823845.8
(22) Date de dépôt: 24.09.2007
(51) Int. Cl.: H04L 12/56

(54) **SYSTEME POUR SECURISER L'ACCES A UNE DESTINATION D'UN RESEAU PRIVE VIRTUEL**
SYSTEM ZUR SICHERUNG DES ZUGANGS ZU EINEM ZIEL IN EINEM VIRTUELLEN PRIVATEN NETZWERK
SYSTEM FOR SECURING THE ACCESS TO A DESTINATION IN A VIRTUAL PRIVATE NETWORK

(30) Priorité: 25.09.2006 FR 0653923
(43) Date de publication de la demande: 10.06.2009
(73) Titulaire: FRANCE TELECOM, 75015 Paris (FR)
(72) Inventeur: LE ROUX, Jean-Louis, F-22300 Lannion (FR); DECRAENE, Bruno, F-92170 Vanves (FR); TRANSY, Estelle, F-75012 Paris (FR)
(74) Mandataire: Delumeau, François Guy
(86) Numéro de dépôt international: PCT/FR2007/052000
(87) Numéro de publication internationale: WO 2008/037918

(56) Documents cités:
- EP-A2- 1 111 860
- EP-A2- 1 318 648
- US-A1- 2005 111 351
- US-A1- 2006 153 067
- US-A1- 2006 209 682
- BLESS R ET AL: "Fast scoped rerouting for BGP" NETWORKS, 2003. ICON2003. THE 11TH IEEE INTERNATIONAL CONFERENCE ON SEPT. 28-OCT. 1, 2003, PISCATAWAY, NJ, USA,IEEE, 28 septembre 2003 (2003-09-28), pages 25-30, XP010683497 ISBN: 0-7803-7788-5

## Description

### Arrière-plan de l'invention

L'invention se situe dans le domaine des télécommunications, et plus particulièrement des réseaux privés virtuels (VPN).

L'invention se situe dans le contexte d'un réseau privé virtuel (VPN) de niveau 3, constitué de routeurs de coeurs, appelés routeurs P, de routeurs d'accès appelés PE, et de routeurs clients appelés CE, utilisant la technologie MPLS VPN définie dans le document de l'Internet Engineering Task Force (IETF), Request for Comment RFC 4364.

La technologie MPLS VPN n'est pas décrite ici, pour plus d'informations on peut se référer au document RFC 4364 précité.

Certains services de communication VPN ont de fortes exigences en termes de disponibilité de CE à CE (par exemple service de voix (Vol P), télémédecine). Ces services nécessitent un reroutage déterministe en moins de 100ms en cas de panne de lien ou de noeud. Aujourd'hui, la seule technologie permettant de telles performances de reroutage est le Fast Reroute consistant à établir à l'avance des chemins de secours locaux contournant l'élément protégé. En cas de panne, le noeud directement en amont met à jour sa table de routage et bascule le trafic sur le chemin de secours. Cette méthode ne nécessite aucun calcul de route ni signalisation après la panne. De plus, les routes de secours sont préinstallées dans les tables de commutation des routeurs, ce qui garantit un temps de reroutage déterministe inférieur à 100ms.

Il existe deux modes pour réaliser cette protection :
- le mode Fast Reroute MPLS reposant sur l'établissement de tunnels primaires MPLS-TE de bout en bout, protégés localement par des tunnels de secours MPLS-TE, ce mode étant décrit dans le document RFC 4090 de l'IETF ;
- le mode Fast Reroute I P reposant sur une protection de routes I P par des routes de secours évitant l'élément protégé et sans risque de boucle. Ces routes de secours peuvent être en mode connecté avec des tunnels MPLS-TE de secours locaux ou en mode non connecté lorsqu'il n'y a pas de risque de boucle. Pour plus de détails sur ce deuxième mode de réalisation, on peut se reporter aux documents suivants :
- Shen, Pan, « Nexthop Fast ReRoute for IP and MPLS» (http://www.potaroo.net/ietf/all-ids/draft-shen-nhop-fastreroute-01.txt) et
- Shand, Bryant, « IP Fast Reroute Framework », http://www.ietf.org/internet-drafts/draft-ietf-rtgwg-ipfrr-framework-05.txt.

On rappelle qu'un « tunnel » est une liaison virtuelle dans laquelle un paquet d'un protocole (eg IPv4, IPv6, MPLS,...) est placé dans un autre paquet "externe" du même ou d'un autre protocole (eg: IP, MPLS, ...) pour son transport d'un point à un autre. Dans ce mécanisme de tunnel, les équipements réseaux situés entre le point d'entrée et le point de sortie du tunnel ne traitent et n'ont connaissance que du paquet externe et pas du paquet interne.

Le mode Fast Reroute MPLS permet, avec un maillage des PEs par des tunnels MPLS-TE primaires, une protection des liens PE-P, P-P et des noeuds P. Il passe difficilement à l'échelle car il nécessite un maillage de tous les routeurs PE et requiert donc un nombre de tunnels au carré du nombre de PEs. Il n'est donc applicable en pratique qu'à un faible nombre de PEs (∼100).

Le mode Fast Reroute IP permet une protection des liens CE-PE, PE-P, P-P et des noeuds P. Il ne nécessite pas de tunnels MPLS-TE primaires et passe donc beaucoup mieux à l'échelle.

Les techniques de Fast Reroute actuelles, présentées ci dessus ne permettent pas de protéger les routeurs d'accès d'un réseau MPLS-VPN.

En effet, la technique Fast Reroute MPLS ne peut protéger les routeurs d'accès car cela nécessiterait de faire démarrer les tunnels MPLS-TE sur les routeurs clients CEs.

Il n'existe pas aujourd'hui de mécanisme permettant de faire du MPLS-TE entre deux routeurs clients.

De plus même si un tel mécanisme était défini, il présenterait des limitations en terme de passage à l'échelle du fait qu'il nécessite un nombre de tunnels au carré du nombre de routeurs clients, et ne serait donc en pratique applicable qu'à un très faible nombre de routeurs clients.

Par ailleurs, la technique Fast Reroute IP ne permet pas de protéger les routeurs d'accès car pour le routeur coeur qui déclenche le Fast Reroute, la destination est le routeur d'accès donc si le routeur d'accès disparaît, il n'a plus de destination.

De plus, même si on indique au routeur coeur un routeur d'accès de secours pour secourir un routeur d'accès nominal, les paquets VPN ne pourront pas être traités par le routeur d'accès de secours qui ne connaît pas le contexte correct pour les traiter.

En effet le routeur coeur va basculer le trafic d'un routeur d'accès nominal vers un routeur d'accès de secours, sans changer le label VPN (car il n'en a pas connaissance).

Or, les labels VPN sont alloués localement par les routeurs d'accès et n'ont qu'une signification locale, si bien que le trafic serait donc routé vers un mauvais VPN sur le routeur d'accès de secours.

Les routeurs d'accès sont des équipements particulièrement sensibles, et ont une forte charge de travail (maintient et mise à jour des tables VPN); les statistiques montrent qu'ils tombent fréquemment en panne.

Les seuls mécanismes de sécurisation contre les pannes de routeur d'accès disponibles aujourd'hui reposent sur la convergence du protocole BGP (pour "Border Gateway Protocol") qui offrent des temps de sécurisation supérieurs à la seconde, incompatibles avec les exigences de disponibilité des services temps réels.

Il est donc primordial pour assurer une bonne disponibilité de routeur client à routeur client de définir de nouveaux mécanismes permettant de protéger rapidement les routeurs d'accès, et capables de supporter un grand nombre de routeurs clients (i.e. passage à l'échelle).

Le document US 2006/0209682 décrit un système dans lequel un routeur d'accès permet de sécuriser un client CE ou un lien routeur d'accès-client CE. Les documents US 2006/153067, Bless R. et al., « Fast scoped rerouting for BGP », US 2005/111351, EP 1318648 et EP 1111860 décrivent des systèmes de reroutage.

### Objet et résumé de l'invention

Selon un premier aspect, l'invention concerne un système pour sécuriser l'accès à une destination d'un réseau privé virtuel raccordé à au moins un routeur d'accès nominal.

Ce système comporte :
- au moins un routeur coeur apte à :
   - détecter une panne affectant une communication avec ce routeur d'accès nominal ; et
   - basculer le trafic vers un routeur d'accès protecteur dans un tunnel de secours évitant le routeur d'accès nominal ;
- ce routeur d'accès protecteur étant apte à :
   - substituer, dans un paquet MPLS, un label VPN nominal propre au routeur d'accès nominal par un label VPN de secours propre à un routeur d'accès de secours raccordé à cette destination ; et
   - rediriger ce paquet vers le routeur d'accès de secours dans un tunnel évitant le routeur d'accès nominal.

Ce routeur d'accès protecteur peut comporter:
- des moyens pour identifier un label VPN nominal propre audit routeur d'accès nominal pour ladite destination ;
- des moyens pour substituer, dans ce paquet MPLS, le label VPN nominal par un label VPN de secours propre à un routeur d'accès de secours pour cette destination ; et
- des moyens pour rediriger le paquet MPLS vers le routeur d'accès de secours dans un tunnel évitant le routeur d'accès nominal.

L'invention permet de protéger un site d'un réseau privé virtuel raccordé à un routeur d'accès nominal et à au moins un routeur d'accès de secours.

Le mécanisme selon l'invention repose sur une protection locale d'un routeur d'accès nominal par les routeurs coeurs directement raccordés à ce routeur d'accès nominal.

En cas de panne affectant le routeur d'accès nominal, le « routeur coeur protecteur », reroute le trafic VPN vers un routeur d'accès dit « routeur d'accès protecteur » capable de ré-aiguiller le trafic, dans un tunnel n'empruntant pas le routeur d'accès nominal.

Conformément à l'invention, le routeur d'accès nominal à protéger doit être raccordé en amont à au moins un routeur coeur protecteur apte à détecter la panne.

L'invention comporte deux modes de réalisation principaux.

Dans un premier mode de réalisation, le routeur coeur envoie au routeur d'accès protecteur, dans le tunnel de secours, une information selon laquelle ce tunnel de secours est utilisé lors de la panne affectant le routeur d'accès nominal.

Cette information peut par exemple être constituée par un label MPLS spécifique placé devant le label VPN.

Dans ce premier mode de réalisation, le routeur d'accès protecteur selon l'invention comporte :
- des moyens pour recevoir, en provenance du routeur coeur, via un tunnel de secours, une information selon laquelle ce tunnel est utilisé lors de la panne ; et
- des moyens pour créer une table de commutation MPLS contextuelle, cette table comportant des instructions pour :
- substituer, dans chaque paquet MPLS reçu dans ledit tunnel de secours, ledit label nominal par le label de secours ; et pour
- aiguiller ce paquet MPLS vers le routeur d'accès de secours via un deuxième tunnel de secours qui évite le routeur d'accès nominal.

Dans un mode préféré de cette première variante de réalisation, le routeur d'accès protecteur selon l'invention comporte des moyens pour identifier le routeur d'accès de secours et obtenir les labels à partir des annonces BGP effectuées par les routeurs d'accès. Cette caractéristique évite une configuration explicite du routeur d'accès selon l'invention pour associer un label de secours à un label nominal.

Le deuxième mode de réalisation de l'invention est particulièrement avantageux lorsque le routeur coeur n'est pas capable d'envoyer l'information représentative de la panne dans le tunnel de secours. Dans ce mode de réalisation, on utilise avantageusement une partition de l'espace des labels VPN.

Comme rappelé précédemment, les labels VPN sont alloués localement par les routeurs d'accès et n'ont qu'une signification locale.

Afin d'éviter les collisions de labels VPN, chaque routeur d'accès alloue, conformément à l'invention, ses labels VPN avec des valeurs qui lui sont propres, de sorte que, les labels d'un routeur d'accès protecteur et de tous les routeurs d'accès nominaux protégés par ce même routeur d'accès protecteur soient différents.

Dans un mode particulier de cette deuxième variante de réalisation, on effectue une partition de l'espace de labels entre le routeur d'accès protecteur, le routeur d'accès nominal qu'il protège et le routeur d'accès de secours.

Dans cette deuxième variante de réalisation, le routeur d'accès protecteur maintient dans sa table de commutation (table MPLS) le label VPN nominal réservé par le routeur d'accès nominal pour une destination donnée, et pointant indirectement vers le routeur d'accès de secours correspondant avec le label VPN de secours réservé par le routeur d'accès de secours pour cette destination.

Le routeur d'accès de secours achemine finalement le trafic vers le bon site destination.

Dans un mode particulier de cette deuxième variante de réalisation, le routeur d'accès protecteur selon l'invention comporte des moyens pour identifier le routeur d'accès de secours et obtenir les labels à partir des annonces BGP effectuées par les routeurs d'accès.

Cette caractéristique évite une configuration explicite du routeur d'accès selon l'invention pour associer un label de secours à un label nominal.

Pendant la panne du routeur d'accès nominal, un routeur d'accès protecteur protégeant un routeur d'accès nominal reçoit le trafic initialement à destination d'un routeur d'accès nominal avec les labels VPN annoncés par ce routeur d'accès nominal pour les sites destinations situés derrière ce routeur d'accès nominal.

Il est chargé de ré-aiguiller les flux vers le ou les routeurs d'accès de secours correspondant, avec le label VPN annoncé par les routeurs d'accès de secours pour ces sites destinations.

Un routeur d'accès protecteur a connaissance de l'ensemble des routeurs d'accès nominaux qu'il protège, par configuration, ou par découverte automatique.

Un routeur d'accès nominal et ses routeurs d'accès de secours, annoncent en BGP un ensemble de destinations atteignables, avec les labels VPN correspondants.

L'annonce par un routeur d'accès d'une adresse IP "D" dans un VPN V identifié par un Route Target "RT_V", avec le label VPN L est notée (routeur d'accès, RT_V, D, L).

Pour un VPN donné (c'est-à-dire un RT donné), les routeurs d'accès nominal et le routeur d'accès de secours doivent utiliser des "routes distinguisher" (RD) BGP différents sur chacun des routeurs d'accès afin qu'une éventuelle utilisation d'un Route Réflecteur BGP ne masque pas la route de secours au routeur d'accès protecteur.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un système pour sécuriser l'accès à un site d'un réseau privé virtuel conforme à l'invention, dans un mode préféré de réalisation ;
- les figures 2 et 3 représentent, sous forme d'organigramme, les procédés de routage selon l'invention, dans des modes particuliers de réalisation.

### Description détaillée d'une première variante de réalisation

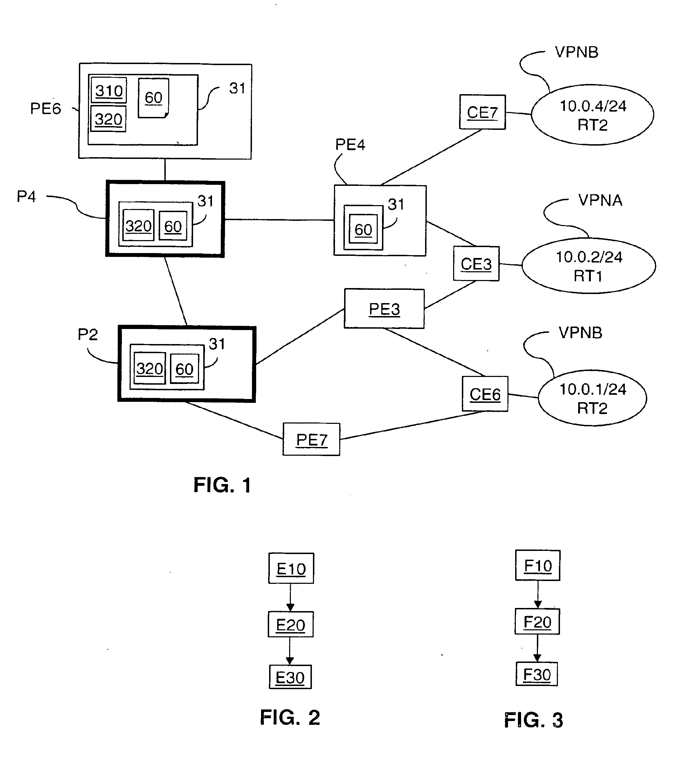

A la figure 1, on a représenté deux réseaux privés virtuels (VPN) référencés respectivement VPNA et VPNB.

Ces réseaux privés virtuels sont identifiés de façon absolue par un identifiant unique (Route Target) respectivement RT1, RT2.

Le VPN VPNA peut être accédé via un routeur client CE3.

Localement, vu de ce routeur client CE3, le VPN VPNA correspond à la plage d'adresses IP 10.0.2/24.

Le VPN VPNB peut être accédé via deux routeurs clients CE6 et CE7.

Localement, vu du routeur client CE6 (respectivement CE7), le VPN VPNB correspond à la plage d'adresses IP 10.0.1/24, (respectivement 10.0.4/24).

Sur cette figure on a représenté :
- quatre routeurs d'accès référencés PE3, PE4, PE6 et PE7 adaptés à mettre en oeuvre le protocole BGP ; et
- deux routeurs coeur référencés P2 et P4 adaptés à mettre en oeuvre le protocole IGP (pour "Interior Gateway Protocol").

Conformément à l'invention, on associe, pour chacun de ces routeurs d'accès, et pour chaque route d'accès à un VPN, un identifiant RD (Route Distinguisher) propre à ce routeur d'accès et à ce VPN.

Dans l'exemple décrit ici, ces identifiants sont les suivants :

| Routeur d'accès | VPN | RD |
|---|---|---|
| PE4 | VPNA | RD1 |
| PE4 | VPNB | RD2 |
| PE3 | VPNA | RD3 |
| PE3 | VPNB | RD4 |
| PE7 | VPNB | RD5 |

Dans l'exemple décrit ici, chaque routeur d'accès comporte, dans sa mémoire non volatile de configuration 31, un fichier 60 de configuration dans lequel cette association est enregistrée.

A titre d'exemple, le fichier 60 de configuration du routeur d'accès PE4 comporte l'instruction suivante :
VRFA : RD1, VRFB : RD2
où VRFA et VRFB représentent les tables de routages VRF (pour "Virtual Routing and Forwarding Table") au niveau IP, associées respectivement aux VPN VPNA et VPNB.

Conformément à l'invention, des espaces de labels disjoints sont configurés sur chacun des routeurs d'accès PE3, PE4, PE6 et PE7.

Dans l'exemple décrit ici, les espaces de labels sont les suivants :

| Routeur d'accès | Espace de labels |
|---|---|
| PE3 | [101-200] |
| PE4 | [201-300] |
| PE6 | [401-500] |
| PE7 | [301-400] |

Dans l'exemple décrit ici, l'espace de labels est enregistré dans le fichier 60 de configuration du routeur d'accès concerné.

A titre d'exemple, le fichier 60 de configuration du routeur d'accès PE3 comporte l'expression :
PE3 Config : VPN Label Space 101-200

Dans l'exemple décrit ici, les routeurs d'accès reliés à au moins un routeur client CE3, CE6, CE7 sont les routeurs d'accès PE3, PE4 et PE7.

De façon connue, chaque routeur d'accès annonce aux autres routeurs d'accès, en utilisant le protocole BGP, les labels à utiliser pour atteindre un VPN particulier.

Par exemple, le routeur d'accès PE3 diffuse l'annonce :
Announce 10.0.2/24 RT1 label 101
pour imposer à tous les autres routeurs d'accès, d'utiliser le label 101, pour atteindre le VPN VPNA correspondant à la plage d'adresses IP 10.2.24, d'identifiant unique (route target) RT1.

Dans cet exemple on s'intéresse à la protection du routeur d'accès PE3, relié respectivement aux routeurs clients CE3 et CE6.

Dans l'exemple de réalisation décrit ici, le routeur d'accès PE3 est protégé par :
- les routeurs d'accès de secours PE4 et PE7 ;
- le routeur d'accès protecteur PE6 conforme à l'invention ; et
- le routeur coeur protecteur P2.

Conformément à l'invention, aucune configuration particulière n'est à apporter au niveau des routeurs d'accès de secours PE4 et PE7, à l'exception des plages de labels.

Nous allons maintenant décrire, la configuration du routeur d'accès protecteur PE6.

Tout d'abord, on déclare le routeur d'accès PE6 en tant que routeur d'accès protecteur du routeur d'accès PE3.

Dans le mode de réalisation décrit ici, cette étape consiste à ajouter l'instruction suivante dans le fichier de configuration 60 du routeur d'accès PE6 :
Config : Protecting PE3

Ensuite, le routeur d'accès protecteur PE6 reçoit les annonces BGP émises par les autres routeurs d'accès PE3, PE4 et PE7.

Pour pouvoir réaliser la fonction de ré-aiguillage le routeur d'accès protecteur PE6 installe dans une table BGP 310 de sa mémoire volatile de configuration 31, les labels VPN annoncés par tous les routeurs d'accès PE3, PE4 et PE7.

On suppose que les routes VPN reçues par le routeur d'accès protecteur PE6 au cours de l'étape E20 sont :

| | Routeur d'accès | Destination | | | Label VPN |
|---|---|---|---|---|---|
| Receive : | PE4 | 10.0.2/24 | RT1 | RD1 | label 201 |
| Receive : | PE4 | 10.0.4/24 | RT2 | RD2 | label 202 |
| Receive : | PE3 | 10.0.2/24 | RT1 | RD3 | label 101 |
| Receive : | PE3 | 10.0.1/24 | RT2 | RD4 | label 102 |
| Receive : | PE7 | 10.0.1/24 | RT2 | RD5 | label 301 |

A chaque fois qu'il reçoit une annonce en provenance du routeur d'accès PE3, le routeur d'accès protecteur PE6 identifie la destination à protéger.

En l'occurrence, il détermine que les destinations suivantes sont à protéger :

| Destination | |
|---|---|
| 10.0.2/24 | RT1 |
| 10.0.1/24 | RT2 |

Pour chacune de ces deux destinations, le routeur d'accès protecteur PE6 recherche dans le tableau 310 une même annonce annoncée par un autre routeur d'accès avec la même destination (plage IP et Route Target).

L'identifiant de route RD n'est pas pris en compte.

Dans l'exemple décrit ici :
1) seule la première route du tableau 310 est candidate pour la première destination : 10.0.2/24 RT1.

| | Routeur d'accès | Destination | | | Label VPN |
|---|---|---|---|---|---|
| Receive : | PE4 | 10.0.2/24 | RT1 | RD1 | label 201 |

2) seule la cinquième route du tableau 310 est candidate pour la deuxième destination : 10.0.1/24 RT2.

| | Routeur d'accès | Destination | | | Label VPN |
|---|---|---|---|---|---|
| Receive : | PE7 | 10.0.1/24 | RT2 | RD5 | label 301 |

Lorsque plusieurs lignes du tableau sont candidates, le procédé selon l'invention met en oeuvre, au cours de cette étape E30 de recherche, une sous-étape de décision, pour ne retenir qu'une seule route.

La recherche d'annonce est suivie par une mise à jour de la table de commutation MPLS 320.

Le résultat de cette étape de mise à jour est donné ci-dessous :

| Substitution labels | Routeur d'accès de secours | Action |
|---|---|---|
| 101 -> 201 | PE4 | (24, P4) |
| 102 -> 301 | PE7 | (26, P4) |

A titre d'exemple, la première ligne de la table de commutation 320 indique, que lorsque le routeur d'accès protecteur PE6 reçoit une trame dont le label VPN est 101, il doit :
- substituer ce label, par le label VPN de secours 201 ; et
- pour atteindre le routeur de secours PE4, envoyer le trafic dans le tunnel T2, permettant d'atteindre PE4, i.e. faire un PUSH 24 et transmettre la trame au routeur coeur P4.

L'homme du métier comprendra que la table de commutation du routeur coeur P4 comporte un enregistrement complémentaire :
24 (PE4) -> pop, PE4
de sorte que le routeur coeur P4, sur réception de la trame reçue du routeur d'accès protecteur PE6, dépile la valeur 24 et transmet la trame au routeur de secours PE4.

De même, la deuxième ligne de la table de commutation 320 indique que, lorsque le routeur d'accès protecteur PE6 reçoit une trame dont le label VPN est 102, il doit :
- substituer ce label, par le label VPN de secours 301 ; et
- pour atteindre le routeur de secours PE7, envoyer le trafic dans le tunnel T3, permettant d'atteindre PE7, i.e. faire un PUSH 26 et transmettre la trame au routeur coeur P4.

Dans l'exemple de réalisation décrit ici, les tunnels T2 et T3 vers les routeurs de secours PE4, PE7 sont établis via LDP.

A chaque changement d'information susceptible de modifier le routage BGP, les opérations ci-dessus sont à effectuer.

Au cours de cette mise à jour de la table de commutation, on s'assure que ces tunnels T2 et T3 ne passent pas par le routeur d'accès nominal à protéger, PE3.

Conformément à l'invention le routeur coeur P2 est configuré comme routeur coeur protecteur. A cet effet le fichier de configuration 60 du routeur coeur P2 comporte l'instruction suivante :
Config : Link P2-PE3 : PE Protector = PE6.

La table de commutation 320 du routeur coeur P2, de format connu, est donnée ci-dessous :

| | | | | |
|---|---|---|---|---|
| 26 | (PE4) | -> | 24, | P4 |
| 30 | (PE7) | -> | pop, | PE7 |
| 31 | (PE6) | -> | 27, | P4 |
| 23 | (PE3) | -> | pop, | PE3 |
| | (PE3 backup PE6) | -> | 27, | P4 |

Conformément à l'invention, le routeur coeur protecteur P2 maintient deux sorties (respectivement aux quatrième et cinquième lignes) pour la destination PE3 :
- une sortie nominale vers PE3 ; et
une sortie de secours vers le routeur d'accès protecteur PE6, via le tunnel de secours T1 ne passant pas par le routeur d'accès nominal PE3. Dans l'exemple de réalisation décrit ici, le tunnel T1 vers le routeur d'accès protecteur PE6 est établi via LDP.

Nous allons maintenant décrire en référence aux figures 2 et 3 le procédé de routage mis en oeuvre dans le routeur protecteur P2 et le procédé de routage conforme à l'invention mis en oeuvre dans le routeur d'accès protecteur PE6.

En régime nominal le routeur coeur protecteur P2 envoie le trafic de destination 10.0.2/24...RT1, sur le routeur d'accès nominal PE3, avec le label VPN nominal 101 annoncé par le routeur d'accès nominal PE3 pour cette destination.

Lorsqu'une panne intervient sur le lien P2-PE3 ou au sein de PE3, le routeur coeur P2 détecte cette panne au cours d'une étape E10.

Puis, au cours d'une étape E20, le routeur coeur protecteur P2 bascule le trafic vers le routeur d'accès protecteur PE6 protégeant le routeur PE3, en conservant le label VPN 101.

Le routeur d'accès protecteur PE6 détecte, au cours d'une étape F10, de son procédé de routage que le paquet MPLS comporte un label VPN nominal réservé par le routeur d'accès nominal PE3 pour la destination 10.0.2 du VPNA.

Au cours d'une étape F20 de son procédé de routage, le routeur d'accès PE6 substitue dans le paquet MPLS reçu à l'étape précédente, le label VPN nominal 101 par le label VPN de secours 201 réservé par le routeur d'accès de secours PE4 pour cette destination.

Puis, le routeur d'accès PE6 redirige, au cours d'une étape E30 de son procédé de routage, le paquet MPLS vers le routeur d'accès de secours PE4.

Arrivé sur PE4 le trafic est bien acheminé vers la destination.

Il en est de même pour la destination 10.0.1 du VPN B.

Dans la description faite précédemment, le routeur d'accès protecteur effectue un routage MPLS vers les routeurs d'accès de secours.

Une autre option est, pour le routeur d'accès protecteur, de créer des VRF de secours.

On note VRF (RT_V, routeur d'accès nominal), la VRF de secours protégeant le VPN V (utilisant le RT RT_V) de la panne du routeur d'accès nominal.

Cette VRF contient toutes les routes VPN ayant un RT "RT_V" en excluant les routes ayant comme next-hop BGP "routeur d'accès nominal".

Pour chaque routeur d'accès nominal, et pour chaque annonce VPN (routeur d'accès nominal, RT_V, D, LN), effectuée par ce routeur d'accès nominal, le routeur d'accès protecteur installe dans la table de commutation MPLS l'entrée suivante:
LN -> look up dans la VRF de secours VRF(RT_V, routeur d'accès nominal).

### Description détaillée d'une deuxième variante de réalisation

Dans la première variante de réalisation décrite ci-dessus, des espaces de labels disjoints sont configurés sur chacun des routeurs d'accès PE3, PE4, PE6 et PE7.

Nous allons maintenant décrire une deuxième variante de réalisation dans laquelle cette configuration n'est pas nécessaire.

Dans cette variante de réalisation, le routeur nominal protégé PE3 définit un espace de label, identifié par un label contextuel LB inséré devant le label nominal 101 dans le plan de transfert.

Le routeur d'accès protecteur PE6 indique au routeur coeur protecteur P2, le label contextuel LB à utiliser en cas de panne affectant la communication avec le routeur nominal PE3.

La distribution de ce label contextuel du routeur d'accès protecteur PE6 vers le routeur coeur protecteur P2 peut être réalisée par une session LDP dite "targetted". Une extension du protocole LDP, telle que définie dans le document RFC3036 de l'IETF est nécessaire pour annoncer le contexte, à savoir le routeur nominal PE3 protégé. Cette annonce peut être réalisée par un nouveau FEC TLV inséré dans un message LDP LabeIMapping.

Dans cette variante de réalisation, le routeur d'accès protecteur PE6 selon l'invention maintient une table MPLS contextuelle, LFI B par routeur nominal à protéger (PE3). Cette table contient pour chaque destination VPN annoncée par PE3, le label VPN réservé par le routeur d'accès nominal (PE3), pointant vers un routeur de secours (PE4) avec le label VPN réservé par le routeur de secours pour cette destination.

La construction de cette table repose sur l'analyse des informations BGP annoncées par les routeurs d'accès nominaux et de secours. La procédure de construction de cette table est identique à celle décrite dans le premier mode de réalisation, à la différence près qu'ici une table MPLS contextuelle est dédiée à la protection d'un routeur d'accès nominal (PE3) et ne contient que les labels réservés par ce routeur d'accès (évitant ainsi les risques de collision dé label et donc le partitionnement).

A titre d'exemple, la table MPLS contextuelle associée à ce routeur nominal (PE3) est la suivante :

| Substitution labels | Routeur d'accès de secours | Action |
|---|---|---|
| 101 -> 201 | PE4 | (24, P4) |
| 102 -> 301 | PE7 | (26, P4) |

Il maintient également une table MPLS principale pointant vers les tables contextuelles. Dans cette table principale, le label contextuel LB pointe vers la table MPLS contextuelle LFIB associée à ce routeur nominal (PE3).

Pendant la panne du routeur nominal PE3, le routeur coeur protecteur P2 ré-aiguille le trafic à destination du routeur nominal PE3, dans le tunnel T1, vers le routeur d'accès protecteur PE6 en ajoutant, avant le label VPN, le label contextuel LB.

Autrement dit, le routeur coeur P2 envoie au routeur d'accès protecteur PE6, dans le tunnel de secours T1, une information selon laquelle ce tunnel de secours est utilisé lors de la panne affectant le routeur d'accès nominal PE3.

Dans l'exemple décrit ici, cette information est constituée par un label MPLS spécifique LB placé devant le label VPN.

Le routeur d'accès protecteur PE6 effectue donc deux lookup MPLS: un premier lookup dans la table de commutation MPLS principale, avec le label LB, permettant d'identifier la table de commutation MPLS contextuelle associée à PE3; puis un deuxième lookup, dans cette table contextuelle avec le label VPN nominal réservé par PE3 (101), permettant de déterminer le label VPN de secours (201) et le routeur d'accès de secours (PE4).

## Revendications

1. Système pour sécuriser l'accès à une destination d'un réseau privé virtuel (VPNA) raccordé à au moins un routeur d'accès nominal (PE3), ce système comportant :
- ledit routeur d'accès nominal (PE3),
- un routeur d'accès de secours (PE4) raccordé à ladite destination,
- au moins un routeur coeur (P2) ;
**caractérisé en ce qu'**il comprend en outre un routeur d'accès protecteur (PE6), ledit routeur coeur étant apte à :
- détecter une panne affectant une communication avec ledit routeur d'accès nominal (PE3) ; et
- basculer le trafic de paquets MPLS vers ledit routeur d'accès protecteur (PE6) dans un tunnel de secours évitant le routeur d'accès nominal (PE3) ; ledit routeur d'accès protecteur (PE6) étant apte à :
- substituer, dans un paquet MPLS, un label VPN nominal propre audit routeur d'accès nominal (PE3) par un label VPN de secours propre audit routeur d'accès de secours (PE4) pour ladite destination ; et
- rediriger ledit paquet vers ledit routeur d'accès de secours (PE4) dans un tunnel évitant ledit routeur d'accès nominal (PE3).

2. Système selon la revendication 1, **caractérisé en ce qu'**il comporte une partition de l'espace de labels VPN entre ledit routeur d'accès protecteur (PE6), ledit au moins un routeur d'accès nominal (PE3) et ledit au moins un routeur d'accès de secours (PE4).

3. Système selon la revendication 1, **caractérisé en ce que** ledit routeur coeur (P2) envoie audit routeur d'accès protecteur (PE6), dans ledit tunnel de secours, une information (11) selon laquelle ce tunnel de secours est utilisé lors de ladite panne.

4. Système selon la revendication 1, dans lequel ledit routeur d'accès protecteur (PE6) comporte :
- des moyens pour identifier un label VPN nominal propre audit routeur d'accès nominal (PE3) pour ladite destination.

5. Système selon la revendication 4, dans lequel ledit routeur d'accès protecteur (PE6) comporte des moyens pour installer dans une table de commutation MPLS, ledit label nominal propre audit routeur d'accès nominal (PE3) pour ladite destination, et pointant vers le routeur d'accès de secours (PE4) avec ledit label VPN de secours propre à ce routeur d'accès de secours (PE4) pour cette destination.

6. Système selon la revendication 4, dans lequel ledit routeur d'accès protecteur (PE6) comporte :
- des moyens pour recevoir, en provenance dudit routeur coeur (P2), via un tunnel de secours, une information selon laquelle ledit tunnel de secours est utilisé lors de ladite panne ; et
- des moyens pour créer une table de commutation MPLS (LFI B1 ) contextuelle, cette table comportant des instructions pour :
- substituer, dans chaque paquet MPLS reçu dans ledit tunnel de secours, ledit label nominal par ledit label de secours ; et pour
- aiguiller ce paquet MPLS vers ledit routeur d'accès de secours (PE4) via ledit tunnel évitant ledit routeur d'accès nominal (PE3).

7. Système selon la revendication 4, 5 ou 6, dans lequel ledit routeur d'accès protecteur (PE6) comporte des moyens pour identifier ledit routeur d'accès de secours (PE4) et obtenir lesdits labels à partir des annonces BGP effectuées par lesdits routeurs d'accès.

8. Procédé pour sécuriser l'accès à une destination d'un réseau privé virtuel (VPNA), le procédé utilisant un système selon la revendication 1 et étant **caractérisé en ce qu'**il comprend :
- une étape de détection, effectuée par le routeur coeur, d'une panne affectant une communication avec ledit routeur d'accès nominal (PE3) ;
- une étape de basculement, effectuée par ledit routeur coeur, du trafic de paquets MPLS vers le routeur d'accès protecteur (PE6) dans un tunnel de secours évitant le routeur d'accès nominal (PE3) ;
- une étape de substitution, dans un paquet MPLS, d'un label VPN nominal propre audit routeur d'accès nominal (PE3) par un label VPN de secours propre audit routeur d'accès de secours (PE4) pour ladite destination, ladite étape de substitution étant effectuée par ledit routeur d'accès protecteur (PE6) ; et
- une étape de redirection, effectuée par ledit routeur d'accès protecteur (PE6), dudit paquet vers ledit routeur d'accès de secours (PE4) dans un tunnel évitant ledit routeur d'accès nominal (PE3).

## Claims

1. System for securing access to a destination of a virtual private network (VPNA) connected to at least one nominal access router (PE3), this system comprising:
- said nominal access router (PE3),
- a backup access router (PE4) connected to said destination,
- at least one core router (P2);
**characterized in that** it furthermore comprises a protector access router (PE6), said core router being suitable for:
- detecting a fault affecting a communication with said nominal access router (PE3); and
- switching the traffic of MPLS packets towards said protector access router (PE6) in a backup tunnel bypassing the nominal access router (PE3); said protector access router (PE6) being suitable for:
- substituting, in an MPLS packet, a nominal VPN label specific to said nominal access router (PE3) with a backup VPN label specific to said backup access router (PE4) for said destination; and
- redirecting said packet towards said backup access router (PE4) in a tunnel bypassing said nominal access router (PE3).

2. System according to Claim 1, **characterized in that** it comprises a partition of the space of VPN labels between said protector access router (PE6), said at least one nominal access router (PE3) and said at least one backup access router (PE4).

3. System according to Claim 1, **characterized in that** said core router (P2) sends to said protector access router (PE6), in said backup tunnel, an information item (11) according to which this backup tunnel is used during said fault.

4. System according to Claim 1, in which said protector access router (PE6) comprises:
- means for identifying a nominal VPN label specific to said nominal access router (PE3) for said destination.

5. System according to Claim 4, in which said protector access router (PE6) comprises means for installing in an MPLS switching table, said nominal label specific to said nominal access router (PE3) for said destination, and pointing towards the backup access router (PE4) with said backup VPN label specific to this backup access router (PE4) for this destination.

6. System according to Claim 4, in which said protector access router (PE6) comprises:
- means for receiving, originating from said core router (P2), vie a backup tunnel, an information item according to which said backup tunnel is used during said fault; and
- means for creating a contextual MPLS switching table (LFI B1), this table comprising instructions for:
- substituting, in each MPLS, packet received in said backup tunnel, said nominal label with said backup label; and for
- steering this MPLS packet towards said backup access router (PE4) via said tunnel bypassing said nominal access router (PE3).

7. System according to Claim 4, 5, or 6 in which said protector access router (PE6) comprises means for identifying said backup access router (PE4) and for obtaining said labels on the basis of the BGP announcements performed by said access routers.

8. Method for securing access to a destination of a virtual private network (VPNA), the method using a system according to Claim 1 and being **characterized in that** it comprises:
- a step of detecting, performed by the core router, a fault affecting a communication with said nominal access router (PE3);
- a step of switching, performed by said core router, the traffic of MPLS packets towards the protector access router (PE6) in a backup tunnel bypassing the nominal access router (PE3);
- a step of substituting, in an MPLS packet, a nominal VPN label specific to said nominal access router (PE3) with a backup VPN label specific to said backup access router (PE4) for said destination, said substitution step being performed by said protector access router (PE6); and
- a step of redirecting, performed by said protector access router (PE6), said packet towards said backup access router (PE4) in a tunnel bypassing said nominal access router (PE3).

## Patentansprüche

1. System zur Sicherung des Zugangs zu einem Ziel in einem virtuellen privaten Netzwerk (VPNA), das an mindestens einen nominalen Zugangsrouter (PE3) angeschlossen ist, wobei das System aufweist:
- den nominalen Zugangsrouter (PE3),
- einen Hilfs-Zugangsrouter (PE4), der an das Ziel angeschlossen ist,
- mindestens einen Kernrouter (P2);
**dadurch gekennzeichnet, dass** es außerdem einen Schutz-Zugangsrouter (PE6) enthält, wobei der Kernrouter fähig ist:
- einen Störfall zu erfassen, der eine Kommunikation mit dem nominalen Zugangsrouter (PE3) beeinträchtigt; und
- den MPLS-Paketverkehr zum Schutz-Zugangsrouter (PE6) in einen Hilfstunnel umzuschalten, der den nominalen Zugangsrouter (PE3) vermeidet; wobei der Schutz-Sugangsrouter (PE6) fähig ist:
- in einem MPLS-Paket ein nominales VPN-Label, das dem nominalen Zugangsrouter (PE3) gehört, durch ein Hilfs-VPN-Label zu ersetzen, das dem Hilfs-Zugangsrouter (PE4) für das Ziel gehört; und
- das Paket zum Hilfs-Zugangsrouter (PE4) in einen Tunnel umzuleiten, der den nominalen Zugangsrouter (PE3) vermeidet.

2. System nach Anspruch 1, **dadurch gekennzeichnet, dass** es eine Aufteilung des VPN-Label-Raums auf den Schutz-Zugangsrouter (PE6), den mindestens einen nominalen Zugangsrouter (PE3) und den mindestens einen Hilfs-Zugangsrouter (PE4) aufweist.

3. System nach Anspruch 1, **dadurch gekennzeichnet, dass** der Kernrouter (P2) an den Schutz-Zugangsrouter (PE6) in dem Hilfstunnel eine Information (11) sendet, gemäß der dieser Hilfstunnel während des Störfalls genutzt wird.

4. System nach Anspruch 1, bei dem der Schutz-Zugangsrouter (PE6) aufweist:
- Einrichtungen, um ein nominales VPN-Label zu identifizieren, das dem nominalen Zugangsrouter (PE3) zu dem Ziel eigen ist.

5. System nach Anspruch 4, bei dem der Schutz-Zugangsrouter (PE6) Einrichtungen aufweist, um in einer MPLS-Schalttabelle das dem nominalen Zugangsrouter (PE3) für das Ziel eigene nominale Label zu installieren, und zum Hilfs-Zugangsrouter (PE4) mit dem Hilfs-VPN-Label weist, das diesem Hilfs-Zugangsrouter (PE4) für dieses Ziel eigen ist.

6. System nach Anspruch 4, bei dem der Schutz-Zugangsrouter (PE6) aufweist:
- Einrichtungen, um eins vom Kernrouter (P2) über einen Hilfstunnel kommende Information zu empfangen, gemäß der der Hilfstunnel im Störfall genutzt wird; und
- Einrichtungen, um eine kontextuelle MPLS-Schalttabelle (LFI B1) zu erzeugen, wobei diese Tabelle Anweisungen enthält, um:
- in jedem im Hilfstunnel empfangenen MPLS-Paket das nominale Label durch das Hilfs-Label zu ersetzen; und um
- dieses MPLS-Paket über den Tunnel unter Vermeidung des nominalen Zugangsrouters (PE3) an den Hilfe-Zugangsrouter (PE4) umzuleiten.

7. System nach Anspruch 4, 5 oder 6, bei dem der Schutz-Zugangsrouter (PE6) Einrichtungen aufweist, um den Hilfs-Zugangsrouter (PE4) zu identifizieren und die Labels ausgehend von den BGP-Ansagen zu erhalten, die von den Zugangsroutern durchgeführt werden.

8. Verfahren zur Sicherung des Zugangs zu einem Ziel in einem virtuellen privaten Netzwerk (VPNA), wobei das Verfahren ein System nach Anspruch 1 verwendet und **dadurch gekennzeichnet ist, dass** es enthält:
- einen durch den Kernrouter durchgeführten Schritt des Erfassens eines Störfalls, der eine Kommunikation mit dem nominalen Zugangsrouter (PE3) beeinträchtigt;
- einen durch den Kernrouter durchgeführten Schritt des Umschaltens des Verkehrs von MPLS-Paketen zum Schutz-Zugangsrouter (PE6) in einem Hilfstunnel unter Vermeidung des nominalen Zugangsrouters (PE3);
- einen Schritt des Ersetzens, in einem MPLS-Paket, eines dem nominalen Zugangsrouter (PE3) eigenen nominalen VPN-Labels durch ein dem Hilfs-Zugangsrouter (PE4) für das Ziel eigenes Hilfs-VPN-Label, wobei der Schritt des Ersetzens vom Schutz-Zugangsrouter (PE6) durchgeführt wird; und
- einen Schritt des vom Schutz-Zugangsrouter (PE6) durchgeführten Umleitens des Pakets zum Hilfs-Zugangsrouter (PE4) in einem Tunnel unter Vermeidung des nominalen Zugangsrouters (PE3).
